# EUROPEAN PATENT SPECIFICATION

(11) **EP 2 296 128 B1**
(45) Date of publication and mention of the grant of the patent: **14.08.2013**
(21) Application number: 09011585.8
(22) Date of filing: 10.09.2009
(51) Int. Cl.: G08G 5/00, H04B 7/185, H04H 20/06

(54) **ADS-B monitoring and broadcasting services for global air traffic management using satellites**
ADS-B-Überwachungs- und -Rundfunkdienste für globales Luftverkehrsmanagement unter Verwendung von Satelliten
Services de diffusion et de surveillance ADS-B pour une gestion de trafic d'air global utilisant des satellites

(43) Date of publication of application: 16.03.2011
(73) Proprietor: Thales Alenia Space Deutschland GmbH, 70825 Korntal-Münchingen (DE)
(72) Inventor: Blomenhofer, Helmut Dr., 88690 Uhldingen (DE); Neufeldt, Holger Dr., 71665 Vaihingen/Enz (DE); Dodel, Hans, 82131 Gauting (DE)
(74) Representative: Dreiss

(56) References cited:
- EP-A2- 1 906 204
- EP-A2- 2 056 272
- WO-A1-2009/112112
- DE-A1-102005 031 439
- DE-A1-102008 026 415
- Gerold Adrian: "ADS-B: Will It Be Filled In?" Aviation Today Avionics magazine 1 March 2006 (2006-03-01), XP002570126 Retrieved from the Internet: URL:http://www.aviationtoday.com/av/catego ries/commercial/ADS-B-Will-It-Be-Filled-In _791.html> [retrieved on 2010-02-17]

## Description

The present invention refers to an arrangement for aircraft surveillance using an Automatic Dependent Surveillance-Broadcast, ADS-B, Monitoring. The arrangement comprises a plurality of receiving stations each adapted for receiving an ADS-B broadcast signal emitted by an aircraft, the broadcast signal comprising information regarding the aircraft emitting the broadcast signal, and ground based means adapted for processing the received broadcast signals.

Furthermore, the invention refers to a method for aircraft surveillance using an Automatic Dependent Surveillance-Broadcast, ADS-B, Monitoring. The method comprises the steps of receiving by at least one of a plurality of receiving stations an ADS-B broadcast signal emitted by an aircraft, the broadcast signal comprising information regarding the aircraft emitting the broadcast signal, and processing the received broadcast signals by ground based processing means.

An arrangement and a method for ADS-B monitoring according to the preamble of claim 1 and 16 is disclosed in EP 2 056 272 A2 as well as in WO 2009/112 112 A1, the latter forming prior art in the sense of Art. 54(3) EPC.

Today's Air Traffic Management uses various Communication, Navigation and Surveillance (CNS) technologies to safely control aircraft from Gate-to-Gate along their different phases of flight from departure, en-route down to approach and landing. Today, aircraft are tracked with primary (PSR) and secondary surface radars (SSR). In areas without radar coverage the pilots have to fly according to procedural flight rules. Recently, with Automatic Dependent Surveillance-Broadcast (ADS-B) it has become possible to track air transport aircraft also with ADS-B ground stations complementary to radars. Similar to radio and television broadcast signals according to the present invention are not directed to a specific receiver but rather can be received by any receiver within reach of the broadcast transmitter and technically capable of receiving the broadcast signals. The principle of ADS-B is the automatic, periodic and unaddressed broadcast of existing on-board data by each aircraft equipped with appropriate transmitters. Data to be broadcast can be, e.g. position, altitude, speed vector, intent, and/or call sign of the aircraft, or the aircraft class, etc. The data broadcast is mostly performed at the aviation frequency of 1090 MHz. The broadcast data can be received at ADS-B ground stations which monitor this frequency and extract the Mode-S 1090 MHz Extended Squitters. The extracted information is then converted into an Air Traffic Control (ATC) standard protocol and forwarded to ATC or other users.

Looking at the worldwide air traffic flow one can identify three major areas of air traffic flow (so-called high density airspaces): Continental US (CONUS), European Community Air Traffic Control (ECAC) Airspace and over Asia. Full Radar Coverage is only available within these high density airspaces.

The surveillance technology ADS-B has started-up using ground based ADS-B receiving stations to monitor the Mode-S 1090 MHz Extended Squitters that are continuously broadcast by each Air Transport Aircraft. Currently, there are ADS-B Ground Station networks installed in Australia and in the USA. ADS-B monitoring is a passive system concept, which means that the ground stations only receive the broadcast signals emitted by the aircraft and do not transmit or broadcast signals themselves.

The Mode-S 1090 MHz signals emitted by the aircraft are broadcast signals i.e. no communication link is established between aircraft and ADS-B ground station since ADS-B is an unaddressed transmission of existing on-board data by each aircraft.

In areas without radar and/or ADS-B ground station surveillance procedural Air Traffic Management (ATM) rules have to be applied. This is typical for oceanic regions and continental regions with weak ATM infrastructure. Many oceanic Flight Information Regions (FIRs) are not even reachable by terrestrial systems. Looking at the worldwide VHF coverage which is used for Voice Communication between aircraft and ATC, one can see that a complete VHF coverage is present only in continental USA, along the west coast of South America, Europe, India, Japan, Indonesia, Australia and New Zealand. All other areas, e.g. above the oceans, Alaska, huge parts of Africa, and huge parts of Asia have no VHF coverage at all.

Furthermore, in the early 1990s the Future Air Navigation System (FANS-1/A) concept was introduced. It includes the Aircraft Communication and Reporting System (ACARS). Normally the ACARS messages are transmitted on VHF. But if the aircraft is outside VHF coverage then a SATCOM link is established to communicate the ACARS messages. For establishing such SATCOM links the aircraft has to have the appropriate equipment consisting of a dedicated Satellite Communication radio and antennae. This equipment is not mandatory on aircraft. Since SATCOM requires extra installation effort and the service is expensive, today only about 35% of all air transport aircraft are equipped with such a SATCOM equipment. The aircraft communicates these messages every 15 min only, due to the rather high costs for the SATCOM service. The reporting of the ADS-B message content via a SATCOM link is also known as ADS-C (C=Contract). ADS-C is mainly used in oceanic airspace and establishes a point-to-point communication link between the aircraft and the receiving stations.

Nowadays the basic ADS-B applications are Air-to-Air Surveillance Applications (ASA) and Air-to-Ground Surveillance Applications (GSA).
ADS-B out:
· ADS-B involves regular, unsolicited transmission of data, available onboard each aircraft, by each aircraft (hence it is an automatic service delivering dependent data).
· This information includes surveillance data e.g. position, altitude, speed vector, intent, call sign, aircraft class, etc.
· ADS-B messages are broadcast spontaneously, regularly and without a specific addressee.
ASA using ADS-B In:
· The avionics receives ADS-B OUT messages from other aircraft.
· This is required for air-to-air applications, e.g. improved situation awareness, airborne separation assurance, etc.
GSA:
ATC Surveillance in non-radar areas:
   · ADS-B provides ATC surveillance in non-radar areas (procedural), where installation of radar is not justified or not possible.

It is an objective of the present invention to overcome the above mentioned disadvantages, in particular to offer better aircraft surveillance possibilities covering a larger area, at reduced costs for the users (e.g. other aircraft, ATC, airline etc.).

To solve this objective, the present invention provides an arrangement and a method for aircraft surveillance using Automatic Dependent Surveillance-Broadcast, ADS-B, monitoring according to claims 1 and 16. Further advantageous embodiments arise from the subclaims. Hence, the reception of the broadcast signals is realized via satellites. For this purpose an antenna, for example of the L-Band type, and a transparent transponder, for example of the 1090 MHz L-band type, is installed on the satellites. The satellites receive the broadcast signals, for example the 1090 MHz Mode-S ES signals, transform them to their own downlink frequency and downlink the signals to satellite ground earth stations.

The invention provides an arrangement for aircraft surveillance using space based Automatic Dependent Surveillance-Broadcast (ADS-B) Monitoring on satellites which have receiving stations in form of transparent transponders onboard the satellites for receiving the broadcast signals. The broadcast signals could be, for example, the 1090 MHz frequency band with its Mode S Extended Squitter (1090 ES). The 1090 MHz Mode-S Transponder (not Extended Squitter) belongs to the mandatory onboard aircraft equipment and the 1090 MHz band is an aviation frequency restricted band for aviation use only. The Mode-S 1090 MHz Extended Squitter is about to become mandatory as well. Its signals are already used by terrestrial ADS-B ground station systems to provide aircraft situational awareness to Air Traffic Control (ATC). Additionally to or instead of receiving the broadcast signals by ground based receiving stations, according to the present invention, the signals are received on satellites and forwarded to satellite ground earth stations using a transparent transponder.

The satellite system could comprise Geostationary (GEO) orbiting or Medium Earth Orbiting (MEO) or Low Earth Orbiting (LEO) satellites or any combination of LEO/MEO/GEO satellites.

When using GEO satellites, the basic idea is to mirror the broadcast signals emitted by the aircraft down to earth using e.g. a transparent transponder payload on the GEO satellites which receive the 1090 MHz band (centre frequency 1090 MHz +/- 3 MHz). Simply mirroring the broadcast signals to the ground by transparent transponders in the satellites has the advantage that only very little Space Qualified equipment is necessary in the satellites. The actual processing of the broadcast signals is effected on the ground by appropriate ADS-B receiver stations, which receive the broadcast signal mirrored by the mirroring equipment provided in the satellites. This has the advantage that the ADS-B receiver stations do not have to be space qualified and that due to the reduced weight of the mirroring equipment compared to the ADS-B receiving stations the costs for launching the satellites are reduced. The transparent transponder could transform the 1090 MHz signal to the GEO downlink band (e.g. 4 or 12 GHz) and downlink the signal to the GEO ground station. Typically a GEO "footprint" is segmented into several hundred cells. For each cell in the GEO footprint a dedicated ADS-B ground receiver is foreseen. At or respectively connected to the GEO Ground Control Centre an ADS-B Processing Centre shall be established which includes an array of ADS-B ground station receivers and an ADS-B data dissemination server. The ADS-B receivers extract the Mode-S 1090 MHz extended squitters on ground for some or all cells within the whole GEO footprint. For example, GEO satellites are operated by Inmarsat, Eutelsat and others.

Near the ADS-B Ground Station receivers an ADS-B server is located. The ADS-B server is also in charge of the data dissemination to the various Air Navigation Service Providers (ANSPs) and Airlines. It sorts the messages per user (ANSP, Airline, etc.), transforms the messages into an ATC standard format and forwards the data to the users.

In an alternative architecture, LEO satellites could be used instead of or complementary to GEO satellites. For example, LEO satellites are operated by Iridium, Globalstar, Thuraya, Orbcomm, and others. The LEO satellites have to be equipped with antennae, for example L-Band antennae, Space Qualified receiving transparent transponders, for example of the 1090 MHz type, and storage devices. The LEO satellites store the received data onboard the satellite until they are in reach of a satellite - ground control station to dump the stored data to the ground station. For the downlink of the received broadcast signals conventional satellite downlink frequencies can be used. The downlink transmits the broadcast signals to one or more ground stations. Iridium is provided with Inter-Satellite Links, which could be used for forwarding the broadcast signals received by a satellite to other satellites from where the signals are transmitted to the ground stations. This could reduce processing latencies.

The satellite Ground Control Stations receive the broadcast signal, for example the 1090 MHz signal, stream and forward this stream back-converted to 1090MHz to an ADS-B Processing Centre. It includes an array of ADS-B ground station receivers and an ADS-B data dissemination server. The ADS-B Ground Station receivers process the signals, for example the 1090 MHz Mode-S signals, and extract the Extended Squitters. The ADS-B data dissemination server is in charge of forwarding the data to the various Air Navigation Service Providers (ANSPs), Airlines and other users. It sorts the messages per user (ANSP, Airline, etc.), transforms the messages into an ATC standard format and forwards the data to the users.

The proposed satellite based ATC system allows the global surveillance of the worldwide air transport aircraft fleet monitoring the mandatory aircraft Mode-S transponder signals or any other air vehicle that broadcasts the Mode-S signal.

The space based ADS-B monitoring can either augment (complement) ground based Automatic Dependent Surveillance-Broadcast (ADS-B) monitoring using satellites for ADS-B Monitoring or realise (global) ADS-B monitoring using satellites as a stand-alone means.

In addition to Air Traffic Control (ATC) tasks, the monitored ADS-B data can be provided and used by other parties. For example, the ADS-B information can also be used to report the Aircraft position to the owing Airline. This may be helpful in case of delay or emergency. The data could also be used by airports for real-time updates of their arrival/ departure flight plans.

The major advantages of this concept are that
· no changes to the aircraft are necessary, because the Mode-S 1090MHz transponder already belongs to the onboard mandatory equipment. The Mode-S 1090MHz Extended Squitters can be observed which are expected to become also mandatory by 2015 in Europe resp. 2020 in the US.
· No additional SATCOM receiver and antenna is needed onboard the aircraft.
· No need for aircraft re-certification activities, as it would be the case if additional equipment had to be installed.
· SATCOM based ACARS (Aircraft Communication and Reporting System) messages are transmitted every 15 min only. The expected update rate of the presented concept will be in the range of some seconds at low latencies.

In addition, the arrangement according to the invention could also provide ADS-B Rebroadcast (ADS-R), Traffic Information Service Broadcast (TIS-B) and Flight Information Broadcast (FIS-B) using the 1090 ES over Satellites. ADS-R is the rebroadcast over a first ADS-B system of surveillance information received via a second ADS-B system. ADS-R provides interoperability in airspace where multiple different ADS-B systems are operating. The principle use of TIS-B is to complement the operation of ADS-B by providing broadcast of surveillance data on aircraft that are not equipped for 1090 MHz ADS-B OUT as an aid to transition to a full ADS-B environment. The basis for this surveillance data may be an air traffic control (ATC) Mode S radar, a surface or approach multi-lateration system, or a multi-sensor data processing system. The TIS-B transmissions use the same signal formats as 1 090 MHz ADS-B and can therefore be accepted by a 1 090 MHz ADS-B receiver. Of course, ADS-R, TIS-B and FIS-B services via SATCOM over AMSS (Aeronautical Mobile Satellite Services) frequencies are known. However, according to the present invention these services are provided on the aviation frequencies (e.g. 1090 MHz, 978 MHz). This allows the use of smaller, lighter, and cheaper hardware in the aircraft and the satellites than when using SATCOM.

Further, the arrangement according to the invention could also provide ADS-B Rebroadcasting (ADS-R), Traffic Information Service Broadcast (TIS-B) and Flight Information Service Broadcast (FIS-B) on other than the ADS-B monitored frequency. For example, if ADS-B monitoring via satellite is realized on the basis of the Mode-S 1090 MHz Extended Squitter, then ADS-R, TIS-B and FIS-B could be realized over 978 MHz UAT.

Apart from 1090 MHz Mode S Extended Squitter (1090 ES) the broadcast signals could also comprise Universal Access Transceiver (UAT) signals at 978 MHz or VHF Data Link Mode 4 (VDL Mode 4) signals. Of course, it would also be possible that the broadcast signals are signals broadcast on other frequency bands and/or with other protocols than those explicitly mentioned above.

In the arrangement according to the invention there may be some data redundancy because Mode-S squitters from one aircraft will be possibly received by several satellites. This data redundancy can be used for integrity checking at the ADS-B servers on ground. If the satellite geometry and reception redundancy to multiple satellites is sufficiently available, then multi-lateration is also possible and multi-lateration technologies could be applied for integrity monitoring using a minimum of two redundant signals received by two or more different satellites receiving the same broadcast signal. With a minimum of four redundant signals/ contributing satellites, multi-lateration could also be used to detect aircraft that broadcast the Mode-S 1090 MHz transponder signals, not limited to but not the extended squitters which are used by ADS-B and thus also including aircraft into the surveillance process that are not equipped with ADS-B.

The present invention allows to monitor the world-wide air traffic observing the 1090 MHz Mode S Extended Squitter or any other appropriate broadcast signal using satellites. The 1090 MHz Mode S Extended Squitter is an existing mandatory aircraft equipment. It allows to monitor all 1090 ES equipped co-operative aircraft and other aeronautical vehicles. In addition, UAT and/or VDL Mode-4 and/or any other signal, which is also broadcast from an air vehicle, could be monitored.

An important aspect of the present invention is to use the satellites to obtain as large a coverage as possible, but to perform as much processing of the received broadcast signals as possible on the ground, thereby simplifying the onboard satellite equipment and reducing the costs for realizing the present invention.

Hereinafter a proposal is made as how to modulate the frequency of air traffic surveillance signals efficiently so as to enhance throughput capacity, in particular in the radio frequency spectrum in the range from 1087 through 1093 MHz. To effect air traffic monitoring by means of radio signals emitted and broadcast automatically by aircraft in flight or on ground, for the purpose of air traffic surveillance (Automatic Dependent Surveillance - Broadcast; ADS-B), a modulation method can be employed which is insensitive to propagation impairments impacting on the frequency, on the amplitude or on the phase of the radio signals.

Instead, the position in time (in a time window) of a radio pulse modulated onto a radio frequency carrier is resorted to, this pulse position bearing the information, e.g., a digital "0" for the position "Early" in the reference time frame, or a digital "1" for the position "Late" in the reference time frame, respectively.

This method is known as Pulse Position Modulation (PPM). The existing ADS-B method employs Pulse Position Modulation (PPM) with two (M=2) states, the positions "Early" relative to the reference time frame window centre, and the position "Late" relative to reference time frame window centre. The method makes use of the frequency spectrum from 1087 to 1093 MHz.

In the method according to the present invention use is made of the pulse position time frame (the time window) to accommodate more than two, for example four (M=4) pulse positions to carry the digital information "00", "01", "11", and "10" in digital communications for the pulse position states "Very Early", "Early", "Late", and "Very Late" relative to the reference time frame (the time window). The proposed method makes use of and shares the existing frequency spectrum ranging from 1087 to 1093 MHz.

Thus, with the method proposed, the radio frequency channel throughput will be doubled to two (M=4) bits per pulse position instead of but one (M=2) bit per pulse position, transported in the same radio frequency spectrum.

In the process, this method does not require a change to the ADS-B system aircraft radio frequency equipment, and the method does not require a frequency radio regulatory allocation change, and thus does not require frequency spectrum coordination.

Further, the method implementation does not require any changes or modifications to existing aircraft equipment but is forward and backward compatible. Aircraft presently equipped with ADS-B (M=2) radio transmit systems are operable with receive stations equipped with the proposed method ADS-B (M=4), and aircraft equipped with proposed ADS-B (M=4) radio transmit systems are operable with standard ADS-B (M=2) receive stations.

Hereinafter, the present invention is explained in detail with reference to the accompanying figures. The figures show:
- Fig. 1: an arrangement for aircraft surveillance according to a preferred embodiment of the present invention;
- Fig. 2: an example for the worldwide coverage by a LEO satellite system;
- Fig. 3: an example for the worldwide coverage by a GEO satellite system; and
- Fig. 4: a known arrangement for aircraft surveillance.

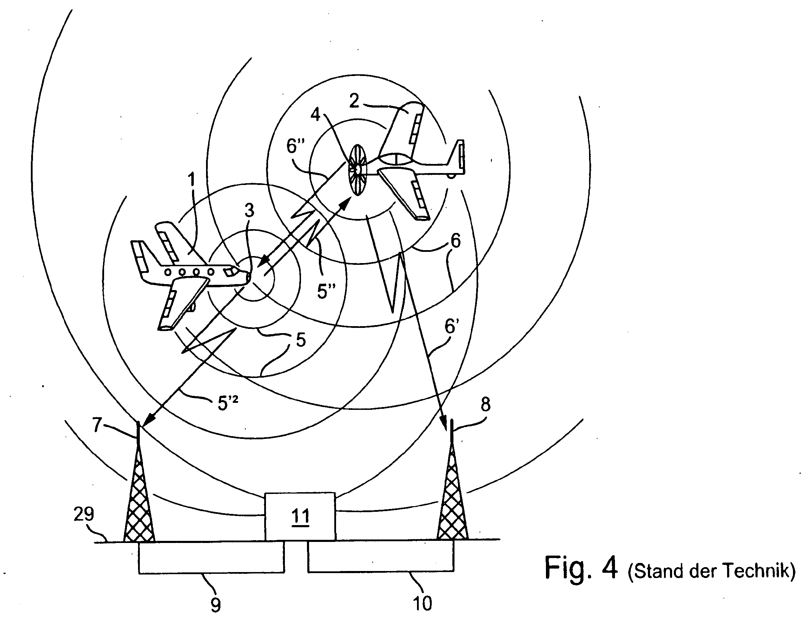

Fig. 4 shows a known arrangement for aircraft surveillance. The arrangement serves for the surveillance of aircraft 1, 2 and possibly of other airborne vehicles, too. The aircraft 1, 2 are each provided with a broadcasting station 3, 4. The stations 3, 4 regularly emit broadcast signals, e.g. 1090 MHz Mode S extended Squitter signals (1090 ES), which can be received by any receiving station within reach of the signal. For underlining the broadcast properties of the signal, concentric circles are drawn around the broadcasting stations 3, 4 in Fig. 4. These circles correspond to a first broadcast signal 5 emitted by a first broadcasting station 3 and to a second broadcast signal 6 emitted by a second broadcasting station 4. Such an arrangement is known in the prior art as Automatic Dependent Surveillance - Broadcast (ADS-B).

The known ADS-B arrangement further comprises a plurality ground based receiving stations, for example the receiving stations 7, 8 shown in Fig. 4. The receiving stations 7, 8 are spaced apart to each other. They are connected to a ADS-B processing centre 11 via data transmission links 9, 10. The data transmission links 9, 10 may be realized as cables, wireless or in any other way. Centre 11 is often operated by a national or regional air traffic controlling authority, for example the "Deutsche Flugsicherung (DFS)" or the "Maastricht Upper Area Control (MUAC)".

Aircraft 1, 2 regularly transmit spontaneously and without a specific receiving address broadcast signals 5, 6. The 1090-ES-signal 5, 6 comprises information regarding the aircraft 1, 2, emitting the signal 5, 6. The information may comprise e.g. the position, the altitude, the speed, the direction, the location of departure, the destination, or the call sign of the aircraft, or the aircraft class et cetera.

In the prior art, the broadcast signals 5, 6 emitted by the transmitting units 3, 4 are received by ground based receiving stations 7, 8 (see arrows 5' and 6'). It is emphasized that the arrows 5' and 6' only serve for illustration purposes and do not mean that a point-to-point link is established between the transmitting stations 3, 4 and the receiving stations 7, 8. In contrast, the broadcast signals 5, 6 are signals which can be received by any receiving station within the reach of the signals. At least part of the information regarding the aircraft 1, 2 contained in the received broadcast signals 5, 6 is transmitted via the data connections 9, 10 to the ADS-B processing centre 11 or other organisations, where they are available for further processing. By means of the information available at the centre 11 a so-called air-to-ground surveillance application (GSA) can be realized with high precision.

Furthermore, the broadcast signals 5, 6 emitted by one of the aircraft 1; 2 can also be received by other aircraft within reach of the signal 5, 6. In the receiving aircraft the received broadcast signals 5, 6 can be used, e.g. for realizing a Traffic Collision Avoidance System (TCAS).

However, it is a drawback of the known arrangement that the broadcast signals 5, 6 emitted by the aircraft 1, 2 can only be received in those regions equipped with appropriate receiving stations 7, 8.

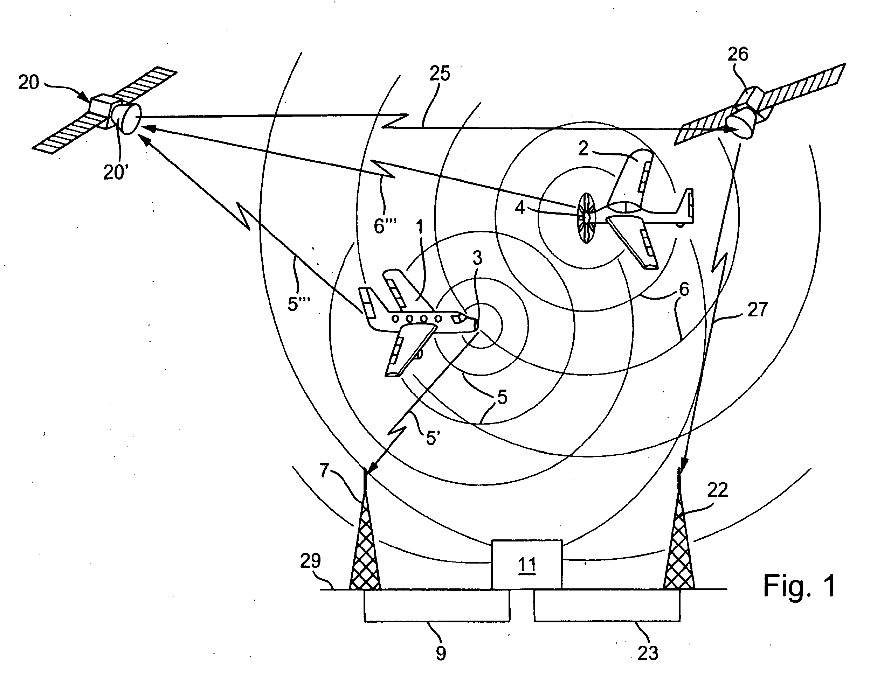

In order to overcome this drawback the present invention suggests that satellites are equipped with the receiving stations in form of transparent transponders for receiving the broadcast signals emitted by the aircraft 1, 2. A schematic view of an arrangement for aircraft surveillance using an ADS-B monitoring according to the present invention is shown in Fig. 1. A major difference to the known arrangement is the fact that at least some of the receiving stations are no longer ground-based but rather spaced in orbit. Fig. 1 shows by way of example two satellite based receiving stations 20, 26. The satellite-receiving stations 20, 26 are provided in addition to the ground-based receiving stations 7, 22. Of course, it would be possible to provide an arrangement for aircraft surveillance using an ADS-B monitoring exclusively equipped with satellite receiving stations 20, 26.

The satellite based receiving stations 20, 26 comprise receiving-transmitting-antennae, like antennae 20' of satellite 20. The transparent transponders transform the received broadcast signal 5, 6 into a frequency for transmitting it from the satellite 20 to other satellites 26 or downlinking it to ground-based satellite receiving stations, like station 22. If the received broadcast signal 5, 6 is downlinked to a ground-based station the transponders transform the received broadcast signal 5, 6 to a downlink frequency, for example around 4 GHz (C-Band), around 12 GHz (Ku-Band), around 20 GHz (Ka-Band) or any other frequency. The received broadcast signals 5, 6 can be transmitted directly to the ground stations 22, or relayed to the ground stations 22 by other satellites, like satellite 26 relays the signals received from satellite 20 which received the broadcast signals 5, 6. The actual processing of the extracted information, for example for realizing GSA, is preferably performed in the ground based ADS-B processing station 11.

Reception of the emitted broadcast signals 5, 6 by the satellite receiving station 20 is shown in Fig. 1 symbolically by arrows 5"', 6"'. The received broadcast signals 5, 6 or the ADS-B information contained therein, respectively, are transmitted via an air-to-ground link 27 to the satellite ground-based control station 22. There, the signal is further forwarded to the ADS-B processing centre 11 via the data connection 23.

Ground based stations 7 and 22 differ from one another in that station 7 is adapted for receiving broadcast signals 5, 6 emitted by aircraft 1, 2. In contrast thereto, station 22 is a satellite control station and it is not able to receive the broadcast signals 5, 6. Rather, the broadcast signals are received by space based receiving stations 20, 26 (the transparent transponders). Station 22 is adapted to receive the received broadcast signals 5, 6 from the receiving satellite stations 20 or from relay satellites 26.

The present invention provides an arrangement for space based ADS-B monitoring with the use of satellite receiving stations 20, which receive 1090 ES signals 5, 6 emitted by aircraft 1, 2, or any other kind of adapted broadcast signals emitted by the aircraft 1, 2. Such broadcast signals could, for example, also comprise Universal Access Transceiver (UAT) signals at 978 MHz or VHF Data Link Mode 4 (VDL Mode 4) signals or broadcast signals different in format and protocol from 1090 ES, UAT and VDL Mode 4.

Further, the arrangement according to the present invention can provide a ADS-B rebroadcast (ADS-R) a traffic information service broadcast (TIS-B) and a flight information broadcast (FIS) by using the broadcast signals 5, 6 via satellite receiving station 20.

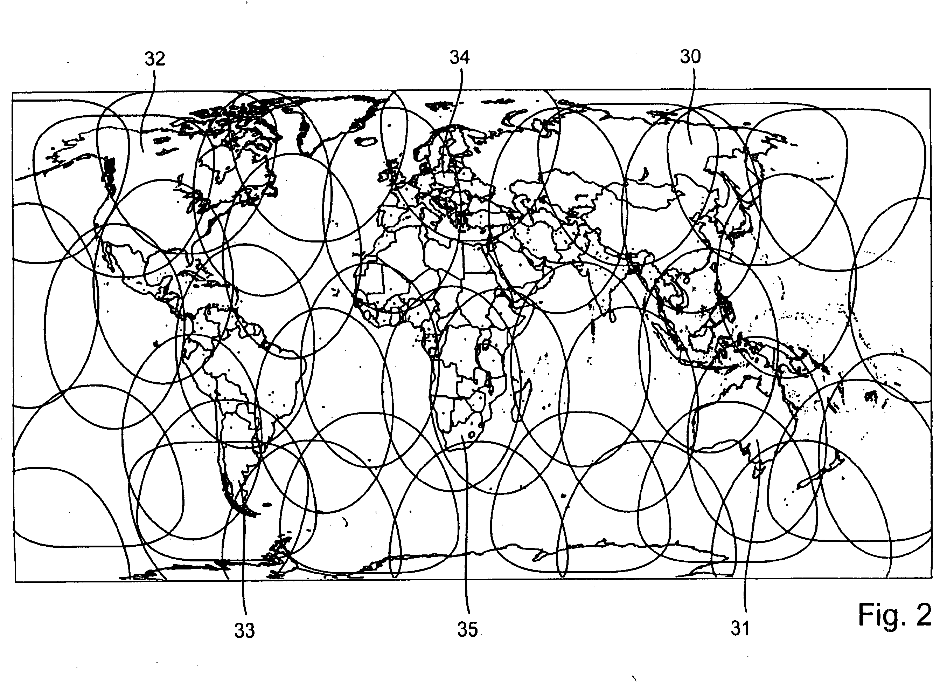

Fig. 2 shows the worldwide coverage of low earth orbit (LEO) satellites, which could be used as satellite receiving stations 20, 26 according to the present invention. Fig. 2 shows the areas of Asia 30, Australia 31, the USA 32, South America 33, Europe 34 and Africa 35. The entire areas are almost completely covered with circles or ellipses, respectively. Each circle or ellipse which corresponds to the coverage by a single LEO satellite is called "footprint". Of course, the coverage shown in Fig. 2 is only exemplary and a snapshot at a certain point in time because the LEO satellites move in respect to the earth's surface in their respective orbits.

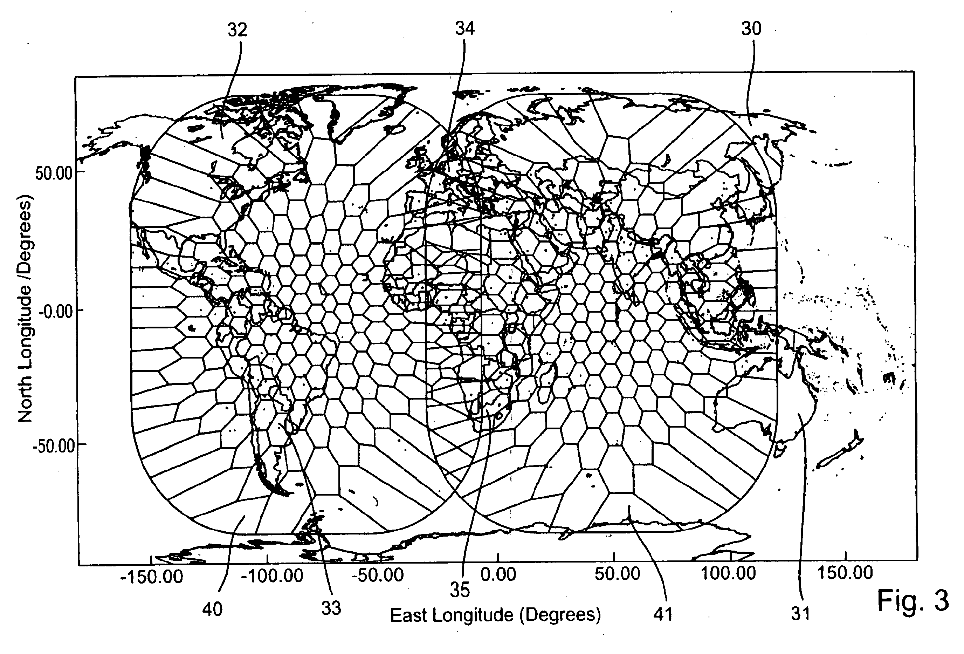

Fig. 3 shows another example for the coverage area of Geostationary (GEO) satellites, which could also be used as satellite receiving stations 20, 26 according to the present invention. The GEO satellites are positioned in a fixed position in respect to the earth's surface. Each GEO satellite covers a much larger area than the LEO satellites. The area covered by a single GEO satellite is called "footprint". Fig. 2 shows two footprints 40, 41. Each footprint 40, 41 comprises up to several hundred cells. A certain part of the receiving/transmitting antennae of the GEO satellite is allocated to a certain cell of the footprint 40, 41.

## Claims

1. Arrangement for aircraft surveillance using an Automatic Dependent Surveillance-Broadcast, ADS-B, Monitoring, comprising a plurality of receiving stations (20, 26, 7) each adapted for receiving an ADS-B broadcast signal (5, 6) emitted by an aircraft (1, 2), the broadcast signal (5, 6) comprising information regarding the aircraft (1, 2) emitting the broadcast signal (5, 6), and ground based means (11) adapted for processing the received broadcast signals (5, 6), **characterized in that** at least some of the receiving stations (20, 26) and antennae (20') are located on satellites, the receiving stations (20, 26) located on the satellites being in the form of : transparent transponders, wherein the transparent transponders are adapted to mirror the received ADS-B broadcast signal (5, 6),to ground based processing means (11) by receiving the broadcast signal (5, 6), transforming it to a satellites' downlink frequency and downlinking the broadcast signal (5, 6) to the ground based processing means (11).

2. Arrangement according to claim 1, wherein the receiving stations (20, 26) are adapted to receive one of the 1090 MHz Mode S Extended Squitter, 1090 MS ES, the Universal Access Transceiver, UAT, at 978 MHz, and the VHF Data Link Mode 4, VDL Mode 4 as the broadcast signal.

3. Arrangement according to claim 1 or 2, wherein at least some of the satellites (20, 26) are Low Earth Orbiting, LEO, orbiting satellites. ,

4. Arrangement according to one of claims 1 to 3, wherein at least some of the satellites (20, 26) are Medium Earth Orbiting, MEO, orbiting satellites.

5. Arrangement according to one of claims 1 to 4, wherein at least some of the satellites (20, 26) are Geostationary, GEO, orbiting satellites.

6. Arrangement according to any one of the preceding claims, wherein the ground based processing means (11) are adapted to use data redundancy of a broadcast signal (5; 6) received by more than one receiving station (20, 26) for integrity checking.

7. Arrangement according to any one of the preceding claims, wherein the ground based processing means (11) ara adapted to use multilateration techniques to detect aircraft (1, 2) which emit only the 1090 MS broadcast signal (5, 6) but not the 1090 MS Extended Squitter.

8. Arrangement according to any one of the preceding claims, wherein the ground based processing means (11) comprise a single or multiple ADS-B receivers.

9. Arrangement according to any one of the preceding claims, wherein the ground based processing means are adapted to (11) extract messages from the broadcast signals (5, 6), the messages containing on-board data regarding the aircraft (1, 2) and its flight parameters.

10. Arrangement according to claim 9, wherein in the ground based processing means (11) are adapted to disseminate the extracted data to users.

11. Arrangement according to any one of the preceding claims, wherein the satellites (20, 26) comprise means adapted for rebroadcasting the received broadcast signals (5, 6) to other satellites or aircraft, as Automatic Dependent Surveillance-Rebroadcast, ADS-R.

12. Arrangement according to any one of the preceding claims, wherein the satellites (20, 26) comprise means adapted for broadcasting Traffic Information Service Broadcast, TIS-B.

13. Arrangement according to any one of the preceding claims, wherein the satellites (20, 26) comprise means adapted for broadcasting Flight Information Service Broadcast, FIS-B.

14. Arrangement according to any one of the claims 11 to 13, wherein the means for rebroadcasting the ADS-R signals and/or the means for broadcasting TIS-B and/or FIS-B signals are adapted to transmit the ADS-R, TIS-B and/or FIS-B signals on a frequency different from the frequency on which the receiving stations (20, 26) receive the broadcast signals.

15. Arrangement according to claim 14, wherein the receiving stations (20, 26) are adapted to receive the broadcast signals on 1090 MHz ES and that the means for rebroadcasting the ADS-R signals and/or the means for broadcasting TIS-B and/or FIS-B signals are adapted transmit the ADS-R, TIS-B and/or FIS-B signals on 978 MHz UAT.

16. Method for aircraft surveillance using an Automatic Dependent Surveillance-Broadcast, ADS-B, Monitoring, comprising receiving by at least one of a plurality of receiving stations (20, 26, 7) an ADS-B broadcast signal (5, 6) emitted by an aircraft (1, 2), the broadcast signal (5, 6) comprising information regarding the aircraft (1, 2) emitting the broadcast signal (5, 6), and processing the received broadcast signals (5, 6) by ground based processing means (11), **characterized in that** the ADS-B broadcast signal (5, 6) is received and
mirrored to the ground based processing means (11) by a transparent transpondeur disposed on a satellite (20, 26), said transparent transponder receiving the broadcast signal (5, 6), transforming it
to the satellite's downlink frequency and downlinking the broadcast signal (5, 6) to the ground based processing means (11).

## Patentansprüche

1. Anordnung für die Luftfahrzeugüberwachung unter Verwendung von Automatic Dependent Surveillance-Broadcast (ADS-B) Monitoring, die eine Vielzahl von Empfangsstationen (20, 26, 7), die jeweils für das Empfangen eines von einem Luftfahrzeug (1, 2) ausgesendeten ADS-B-Rundfunksignals (5, 6) angepasst sind, wobei das Rundfunksignal (5, 6) Informationen bezüglich des das Rundfunksignal (5, 6) aussendenden Luftfahrzeugs (1, 2) enthält, und eine bodengestützte Einrichtung (11), die für das Verarbeiten der empfangenen Rundfunksignale (5, 6) angepasst ist, aufweist, **dadurch gekennzeichnet, dass** mindestens einige der Empfangsstationen (20, 26) und Antennen (20') sich an Bord von Satelliten befinden, wobei die sich an Bord von Satelliten befindenden Empfangsstationen (20, 26) als transparente Transponder ausgestaltet sind, wobei die transparenten Transponder angepasst sind, das empfangene ADS-B-Rundfunksignal (5, 6) zu bodengestützten Verarbeitungseinrichtungen (11) zu spiegeln, indem sie das Rundfunksignal (5, 6) empfangen, es in eine Abwärtsfunkfrequenz des Sätelliten umsetzen und das Rundfunksignal (5, 6) abwärts zur bodengestützten Verarbeitungseinrichtung (11) senden.

2. Anordnung nach Anspruch 1, wobei die Empfangsstationen (20, 26) angepasst sind, 1090-MHz-Mode S Extended Squitter, 1090 MS ES, Universal Access Transceiver, UAT bei 978 MHz oder VHF Data Link Mode 4, VDL Mode 4 als das Rundfunksignal zu empfangen.

3. Anordnung nach Anspruch 1 oder 2, wobei mindestens einige der Satelliten (20, 26) Satelliten auf einer niedrigen Erdumlaufbahn (LEO) sind.

4. Anordnung nach einem der Ansprüche 1 bis 3, wobei mindestens einige der Satelliten (20, 26) Satelliten auf einer mittelhohen Erdumlaufbahn (MEO) sind.

5. Anordnung nach einem der Ansprüche 1 bis 4, wobei mindestens einige der Satelliten (20, 26) Satelliten auf einer geostationären Umlaufbahn (GEO) sind.

6. Anordnung nach einem der vorangegangenen Ansprüche, wobei die bodengestützte Verarbeitungseinrichtung (11) angepasst ist, eine Datenredundanz eines Rundfunksignals (5; 6), das von mehr als einer Empfangsstation (20, 26) empfangen wurde, für das Kontrollieren der Integrität zu nutzen.

7. Anordnung nach einem der vorangegangenen Ansprüche, wobei die bodengestützte Verarbeitungseinrichtung (11) angepasst ist, Multilaterationsverfahren zu nutzen, um Luftfahrzeuge (1, 2) zu erkennen, die nur das 1090 MS-Rundfunksignal (5, 6), aber nicht das 1090 MS Extended Squitter-Signal aussenden.

8. Anordnung nach einem der vorangegangenen Ansprüche, wobei die bodengestützte Verarbeitungseinrichtung (11) über einen einzelnen oder mehrere ADS-B-Empfänger verfügt.

9. Anordnung nach einem der vorangegangenen Ansprüche, wobei die bodengestützte Verarbeitungseinrichtung (11) angepasst ist, Nachrichten aus den Rundfunksignalen (5, 6) zu extrahieren, wobei die Nachrichten Borddaten in Bezug auf das Luftfahrzeug (1, 2) und seine Flugparameter enthalten.

10. Anordnung nach Anspruch 9, wobei die bodengestützte Verarbeitungseinrichtung (11) angepasst ist, die extrahierten Daten an Anwender zu verbreiten.

11. Anordnung nach einem der vorangegangenen Ansprüche, wobei die Satelliten (20, 26) über Einrichtungen verfügen, die angepasst sind, die empfangenen Rundfunksignale (5, 6) als Automatic Dependent Surveillance-Rebroadcast, ADS-R, wieder zu anderen Satelliten oder Luftfahrzeugen auszustrahlen.

12. Anordnung nach einem der vorangegangenen Ansprüche, wobei die Satelliten (20, 26) über Einrichtungen verfügen, die angepasst sind, Traffic Information Service Broadcast, TIS-B, auszustrahlen.

13. Anordnung nach einem der vorangegangenen Ansprüche, wobei die Satelliten (20, 26) über Einrichtungen verfügen, die angepasst sind, Flight Information Service Broadcast, FIS-B, auszustrahlen.

14. Anordnung nach einem der Ansprüche 11 bis 13, wobei die Einrichtungen zum Wiederausstrahlen der ADS-R-Signale und/oder die Einrichtungen zum Ausstrahlen von TIS-Bund/oder FIS-B-Signalen angepasst sind, die ADS-R-, TIS-Bund/oder FIS-B-Signale auf einer Frequenz zu senden, die sich von der Frequenz, auf der die Empfangsstationen (20, 26) die Rundfunksignale empfangen, unterscheidet.

15. Anordnung nach Anspruch 14, wobei die Empfangsstationen (20, 26) angepasst sind, die Rundfunksignale auf 1090 MHz ES zu empfangen, und die Einrichtungen zum Wiederausstrahlen der ADS-R-Signale und/oder die Einrichtungen zum Ausstrahlen von TIS-B- und/oder FIS-B-Signalen angepasst sind, die ADS-R-, TIS-B- und/oder FIS-B-Signale auf 978 MHz UAT zu senden.

16. Verfahren für die Luftfahrzeugüberwachung unter Verwendung von Automatic Dependent Surveillance-Broadcast (ADS-B) Monitoring, mit Empfangen eines von einem Luftfahrzeug (1, 2) ausgesendeten ADS-B-Rundfunksignals (5, 6) durch mindestens eine aus einer Vielzahl von Empfangsstationen (20, 26, 7), wobei das Rundfunksignal (5, 6) Informationen bezüglich des das Rundfunksignal (5, 6) aussendenden Luftfahrzeugs (1, 2) enthält, und Verarbeiten der empfangenen Rundfunksignale (5, 6) durch die bodengestützte Verarbeitungseinrichtung (11), **dadurch gekennzeichnet, dass** das ADS-B-Rundfunksignal (5, 6) von einem sich an Bord eines Satelliten (20, 26) befindenden transparenten Transponders empfangen und zur bodengestützten Verarbeitungseinrichtung (11) gespiegelt wird, wobei der transparente Transponder das Rundfunksignal (5, 6) empfängt, es in die Abwärtsfunkfrequenz des Satelliten umsetzt und das Rundfunksignal (5, 6) abwärts zur bodengestützten Verarbeitungseinrichtung (11) sendet.

## Revendications

1. Agencement de surveillance d'aéronef utilisant une gestion de diffusion de surveillance dépendante automatique, ADS-B , comprenant plusieurs stations de réception (20, 26, 7) adaptées chacune pour recevoir un signal de diffusion ADS-B (5, 6) émis par un aéronef (1, 2), le signal de diffusion (5, 6) comprenant des informations concernant l'aéronef (1, 2) émettant le signal de diffusion (5, 6), et des moyens situés au sol (11) adaptés pour traiter les signaux de diffusion reçus (5, 6), **caractérisé en ce qu'**au moins certaines des stations de réception (20, 26) et antennes (20') sont situées sur des satellites, les stations de réception (20, 26) situées sur les satellites ayant la forme de transpondeurs transparents, les transpondeurs transparents étant adaptés pour renvoyer le signal de diffusion ADS-B reçu (5, 6) vers le sol vers les moyens de traitement situés au sol (11) en recevant le signal de diffusion (5, 6), en le transformant à une fréquence de liaison descendante des satellites et en envoyant par liaison descendante le signal de diffusion (5, 6) vers les moyens de traitement situés au sol (11).

2. Agencement selon la revendication 1, dans lequel les stations de réception (20, 26) sont adaptées pour recevoir un parmi le squitter étendu en mode S à 1090 MHz, 1090 MS ES, l'émetteur - récepteur à accès universel, UAT, à 978 MHz, et le mode 4 de liaison de données VHF, VDL Mode 4 comme signal de diffusion.

3. Agencement selon les revendications 1 ou 2, dans lequel au moins certains des satellites (20, 26) sont des satellites orbitant en orbite terrestre basse, LEO.

4. Agencement selon l'une quelconque des revendications 1 à 3, dans lequel au moins certains des satellites (20, 26) sont des satellites orbitant en orbite terrestre moyenne, MEO.

5. Agencement selon l'une quelconque des revendications 1 à 4, dans lequel au moins certains des satellites (20, 26) sont des satellites orbitant géostationnaires, GEO.

6. Agencement selon l'une quelconque des revendications précédentes, dans lequel les moyens de traitement situés au sol (11) sont adaptés pour utiliser une redondance de données d'un signal de diffusion (5, 6) reçu par plus d'une station de réception (20, 26) pour un contrôle d'intégrité.

7. Agencement selon l'une quelconque des revendications précédentes, dans lequel les moyens de traitement situés au sol (11) sont adaptés pour utiliser des techniques de multilatération pour détecter un aéronef (1, 2) qui émet uniquement le signal de diffusion 1090 MS (5, 6) mais pas le squitter étendu 1090 MS.

8. Agencement selon l'une quelconque des revendications précédentes, dans lequel les moyens de traitement situés au sol (11) comprennent un récepteur ADS-B unique ou de multiples récepteurs ADS-B.

9. Agencement selon l'une quelconque des revendications précédentes, dans lequel les moyens de traitement situés au sol (11) sont adaptés pour extraire des messages à partir des signaux de diffusion (5, 6), des messages contenant des données embarquées concernant l'aéronef (1, 2) et ses paramètres de vol.

10. Agencement selon la revendication 9, dans lequel les moyens de traitement situés au sol (11) sont adaptés pour disséminer les données extraites vers des utilisateurs.

11. Agencement selon l'une quelconque des revendications précédentes, dans lequel les satellites (20, 26) comprennent des moyens adaptés pour rediffuser les signaux de diffusion reçus (5, 6) vers d'autres satellites ou aéronefs, sous la forme d'une rediffusion de surveillance dépendante automatique, ADS-R.

12. Agencement selon l'une quelconque des revendications précédentes, dans lequel les satellites (20, 26) comprennent des moyens adaptés pour diffuser une diffusion de service d'informations de trafic, TIS-B.

13. Agencement selon l'une quelconque des revendications précédentes, dans lequel les satellites (20, 26) comprennent des moyens adaptés pour diffuser une diffusion de service d'informations de vol, FIS-B

14. Agencement selon l'une quelconque des revendications 11 à 13, dans lequel les moyens pour rediffuser les signaux ADS-R et/ou les moyens pour diffuser les signaux TIS-B et/ou FIS-B sont adaptés pour transmettre les signaux ADS-R, TIS-B et/ou ETS-B sur une fréquence différente de la fréquence sur laquelle les stations de réception (20, 26) reçoivent les signaux de diffusion.

15. Agencement selon la revendication 14, dans lequel les stations de réception (20, 26) sont adaptées pour recevoir les signaux de diffusion sur ES 1090 MHz et les moyens pour rediffuser les signaux ADS-R et/ou les moyens pour diffuser des signaux TIS-B et/ou FIS-B sont adaptés pour transmettre les signaux ADS-R, TIS-B et/ou FIS-B sur UAT 978 MHz.

16. Procédé de surveillance d'aéronef utilisant une gestion de diffusion de surveillance dépendante automatique, ADS-B, consistant à recevoir par au moins une parmi plusieurs stations de réception (20, 26, 7) un signal de diffusion ADS-B (5, 6) émis par un aéronef (1, 2), le signal de diffusion (5, 6) comprenant des informations concernant l'aéronef (1, 2) émettant le signal de diffusion (5, 6), et traitant les signaux de diffusion reçus (5, 6) par des moyens de traitement situés au sol (11), **caractérisé en ce que** le signal de diffusion ADS-B (5, 6) est reçu et renvoyé aux moyens de traitement situés au sol (11) par un transpondeur transparent disposé sur un satellite (20, 26) le transpondeur transparent recevant le signal de diffusion (5, 6), le transformant à la fréquence de liaison descendante du satellite et renvoyant par liaison descendante le signal de diffusion (5, 6) aux moyens de traitement situés au sol (11).
